**Europäisches Patentamt**

**European Patent Office**

**Office européen des brevets**

(19)

(11) Publication number : **0 335 871 B1**

(12)

# EUROPEAN PATENT SPECIFICATION

(45) Date of publication of patent specification :
**15.04.92 Bulletin 92/16**

(51) Int. Cl.⁵ : **G01N 11/10**

(21) Application number : **87907161.1**

(22) Date of filing : **27.10.87**

(86) International application number :
**PCT/SE87/00496**

(87) International publication number :
**WO 88/03263 05.05.88 Gazette 88/10**

(54) **RHEOMETER.**

(30) Priority : **27.10.86 SE 8604564**

(43) Date of publication of application :
**11.10.89 Bulletin 89/41**

(45) Publication of the grant of the patent :
**15.04.92 Bulletin 92/16**

(84) Designated Contracting States :
**AT BE CH DE FR GB IT LI LU NL SE**

(56) References cited :
**GB-A- 850 942**

(73) Proprietor : **BOHLIN REOLOGI AB**
**S-223 70 Lund (SE)**

(72) Inventor : **BOHLIN, Leif, Rune**
**Krankesjövägen 12**
**S-240 17 Södra Sandby (SE)**
Inventor : **LARSSON, Sven-Erik**
**Albovägen 2**
**S-232 02 Akarp (SE)**

(74) Representative : **Wiklund, Erik et al**
**AWAPATENT AB Box 5117**
**S-200 71 Malmö (SE)**

## Description

The present invention relates to a rheometer comprising a frame having at least one measuring probe which is rotatable by means of a driving device and movable into engagement with a sample whose viscoelastic properties are to be studied, and a measuring equipment for measuring energy transmitted from said measuring probe to said sample.

It has been known for a number of years to study the viscoelastic properties of fluidal materials by means of a rheometer of the above-mentioned construction. For such studies, the rotatable shaft and the measuring probe associated therewith are driven in the desired manner, for example at a constant or oscillating angular velocity, and via the sample disposed between the measuring probes, the movement of the rotatable shaft and the measuring probe is converted into a torque of the stationary shaft to which torque-indicating means, such as strain gages connected to a measuring equiment, are fixed. Strain gages and similar known measuring devices which are wired to the measuring equipment, are relatively insensitive, and furthermore the wires may adversely affect the measuring result.

A material has recently been developed whose magnetoelastic properties are extremely interesting and which is characterised in that already a minute force applied to a ribbon of this material will cause a considerable change in the permeability of the material. The material is described in the publication "Magnetostrictive torsional strain in transverse-field-annealed Metglas® 2605", M. Liniers, V.Madurga, M.Vázquez and A.Hernando, Phys. Rev. B, $\underline{31}$, 4425 (1985), and is commercially available in ribbon form under the trade name METGLAS 2605SC. Although other forms of the material may be utilised, the ribbon form is preferred, and for this reason the expression "magnetoelastic ribbon" is used below and in the appended claims for a ribbon having a high magnetoelastic coupling factor.

In the patent specification GB-A-850-942 is disclosed a rotary viscometer, wherein a body is submerged into a liquid the viscosity of which is to be measured. The body is allowed to rotate or vibrate and the resistance to motion is measured.

The basis of this invention is the wish for a new rheometer which has a far higher sensitivity or capability of measuring more accurately than before the viscoelastic properties of fluids, and with which there is no risk that the measuring devices or the connections thereof will adversely affect the measuring result.

By utilising magnetoelastic materials, this wish can be complied with by means of a simple and reliable construction which, according to one aspect of the invention, is characterised in that the measuring probe has a portion coaxial with the axis of rotation and provided with at least one peripheral set of magnetoelastic ribbons, said portion being surrounded in contactless manner by at least one coil arrangement which comprises a primary coil connectible to a voltage source and a secondary coil connected to a measuring equipment. If the rheometer according to this particular construction has one rotatable and one stationary shaft, either shaft, or both, may have these ribbons and coils.

According to another aspect of the invention, the rheometer may have a rotatable and/or stationary shaft consisting of a tape or rod of magnetostrictive material, said shaft being surrounded by a coil connected to a measuring equipment and connectible to a current source at terminals on both sides of the coil.

To obtain the desired accurate measurement, a rheometer frame is required which is far more stable than prior art frames, and to this end the present invention provides a frame having a stable base plate on which a massive body is mounted which has a central horizontal through opening into which the shafts extend vertically from opposing bores in the body, such that the sample-carrying portion of measuring probes lies approximately in the center of the opening. The body is preferably rectangular, and the opening therein is circular. The shafts project radially into the opening and are accommodated axially and centrally therein and surrounded by annular reinforcements integral with the body and provided on the wall defining the opening.

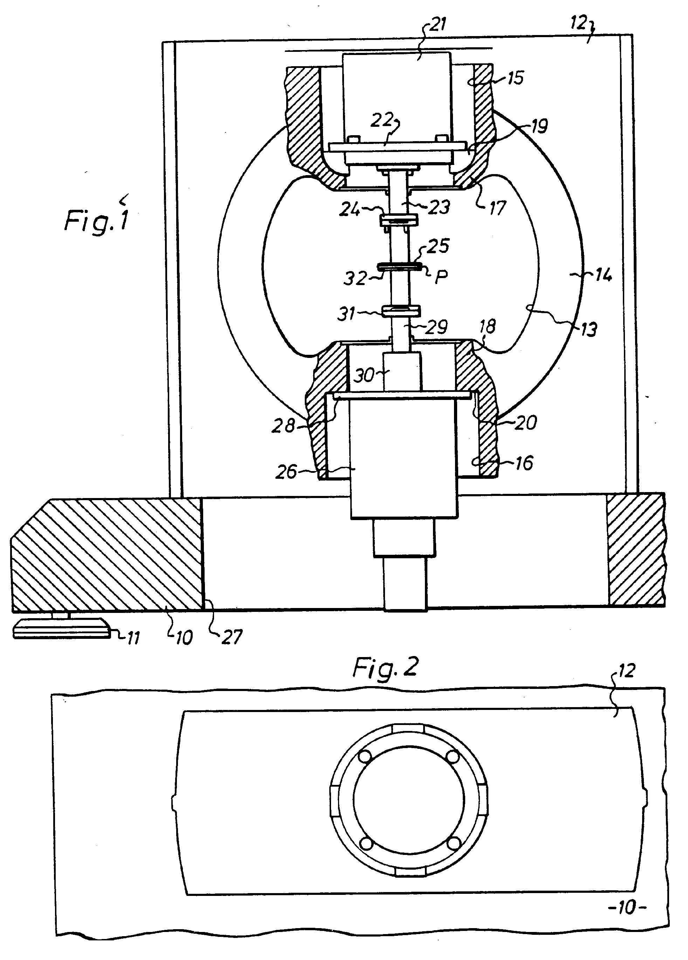

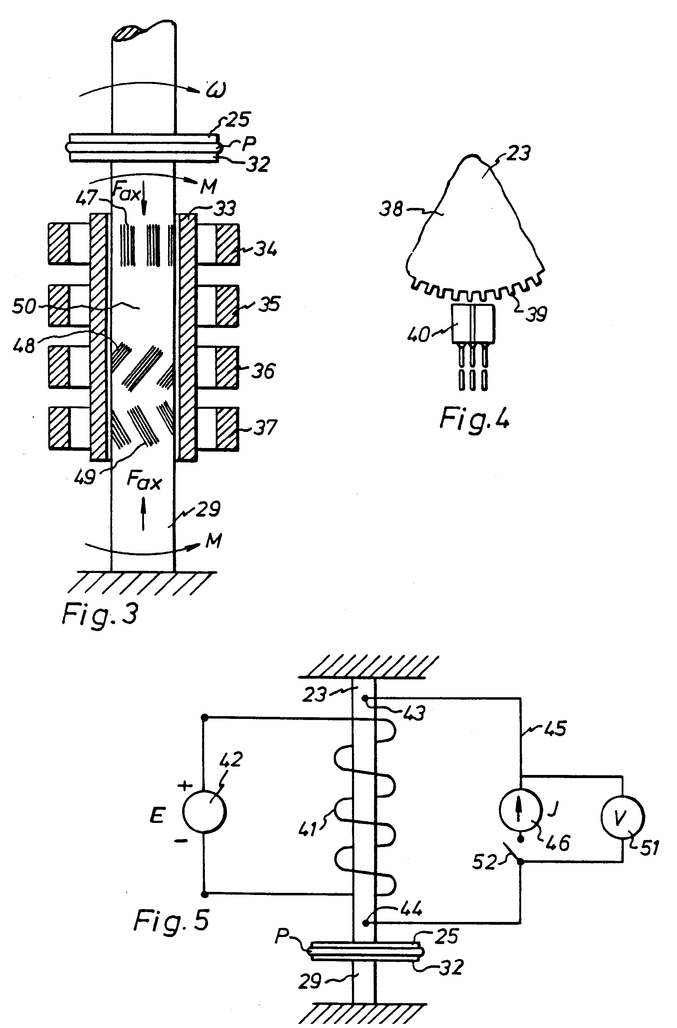

The invention will be described in more detail below, reference being had to the accompanying drawings illustrating enbodiments chosen by way of example. Fig. 1 is a lateral view, partly in section, of a portion of a rheometer according to the invention. Fig. 2 is a top plan view of the rheometer shown in Fig. 1. Fig. 3 is a schematic lateral view of an arrangement of magnetoelastic ribbons on a shaft of the rheometer according to the Figs. 1 and 2, and coils surrounding the ribbons. Fig. 4 illustrates an example of a device for controlling the shaft rotation, and Fig. 5 illustrates, also schematically, a device for rotating a shaft and for measuring the shaft rotation.

The rheometer as shown in Fig. 1 and 2 comprises a mounting or a base plate 10 of natural or artificial stone of considerable weight. The plate 10 is supported by screw-threaded feet 11 for adjustment of the level of the plate 10. A body 12 is mounted on the plate 10, for example by means of bolts (not shown) and/or glue. The body 12 which is preferably made of cast iron, is square and has a central circular through opening 13 bevelled at its opposing ends, as shown at 14. The body 12 has through openings 15, 16 which are located vertically opposite each other and whose center axes extend radially in relation to the circular opening 13 and are located centrally between the flat sides of the body 12, as shown in Fig. 2. The openings 15, 16 are surrounded by annular reinforcements 17, 18 on the wall defining the opening 13. Adjacent their end facing the opening 13, the openings 15, 16 are provided with a shoulder 19 and 20, respective. By means of the shoulder 19 an electric motor 21 having a surrounding flange 24 is mounted in the opening 15. In similar manner, a positioning device 26 to be described in more detail below is secured, by means of a flange 28, to the shoulder 20 in the opening 16. A measuring probe 25 having a journal is mounted on the motor shaft 23 by means of a dismantleable coupling 24. In similar manner, a shaft 29 extends from the positioning devise 26 and is seured, by means of a coupling 31 corresponding to the coupling 24, to the journal of a measuring probe 32 located opposite the measuring probe 25. In this enbodiment, the measuring probes 25, 32 are in the form of the discs having coaxial journals, although many other forms are, of course, conceivable. Thus, the disc of the measuring probe 32 can be replaced by a cup to accommodate a liquid sample, and for other applications the two measuring probes 25, 32 may be replaced by clips. A measuring equipment 30 to be described in more detail below is mounted coaxially on the positioning device 26.

In broad outline, the rheometer as shown in Figs. 1 and 2 is used in the following manner. If it is desired to determine the viscoelastic properties of a material, a sample P of the material is placed on the lower measuring probe 32, as shown i Fig. 1, by first activating the positioning device 26 for vertical downward movement of the shaft 29 together with the coupling 31 and the measuring probe 32, such that a space is obtained for placing the sample P on this measuring probe. Then the positioning device is again activated for moving for measuring probe 32 by means of the shaft 29 and the coupling 31 into an upper and exactly defined position at a predetermened distance from the upper measuring probe 25, in which position the sample P is in contact with both measuring probes. After that, the motor 21 is activated to rotate the upper shaft 23 in the desired manner, while the lower shaft 29 is held stationary. For this reason, the shafts 23 and 29 are identified below and in the claims as the rotary shaft 23 and the stationary shaft 29. It will be appreciated that the stationary shaft 29 can be entirely rigidly connected with the body 12, but it may also be braked in order to yield at a predetermined torque. The term "stationary shaft" therefore implies that the shaft 29 somehow is prevented from turning when the shaft 23 rotates. By means of the motor, the shaft 23 and thus the measuring probe 25 can be rotated at a constant or oscillating angular velocity, a linearly increasing or decreasing angular velocity, an angular velocity changing stepwise, etc. The rotation is transmitted to the stationary shaft via the sample P positioned between and in contact with measuring probes 25, 32, and by means of the measuring equipment 30 the torque transmitted to the measuring probe 32 and the shaft 29 via the sample P can be read, and a measure of the viscoelastic properties the material constituting the sample P is obtained.

As has been mentioned before, the rheometer according to the invention is intended to provide extremely accurate measuring results, and for this reason theframe has the stable construction described above. However, this requires also a sensitive measuring equipment, and an example of the measuring equipment disposed within the casing 30 is shown schematically in Fig. 3. A peripherally arranged series of ribbons 47 of the magnetoelastic material mentioned in the introduction are provided on the shaft 29 extending through the casing 30, the ribbons being placed with their longitudinal direction in the axial direction of the shaft 29. Beneath the ribbons 47, there is shown in Fig. 3 a region of the shaft 29 which is entirely without magnetoelastic ribbons, followed by two series of ribbons 48 and 49 respectively. As will appear, the ribbons 49 form an angle of 45° with the axial direction. The ribbons 48, 49 consist, like the ribbons 47, of magnetoelastic material, preferably of the type commercially available under the trade mark METGLAS 2605SC. The ribbons may consist of individual units which are glued to the shaft 29 by means of a suitable glue which gives a highly rigid glue line so that any movements of the shaft 29 are transmitted to the ribbons and are not absorbed by the glue line. The ribbons 47, 48 and 49 may also be applied to the shaft by electrolytic means, or by so-called "sputtering". Mounted outside the ribbons 47, 48 and 49 and the region 50 of the shaft 29 having no ribbons, is a common primary coil 33 which extends coaxially with the shaft 29 and is out of contact with the shaft and the ribbons 47, 48, 49 affixed thereto. The primary coil 33 is connected by means of wires (not shown) to a voltage source (not shown). Outside the primary coil 33, secondary coils 34, 35 are provided opposite the ribbons 47 and the region 50 without ribbons, respectively. In similar manner, secondary coils 36 and 37 are mounted outside the primary coil 33 opposite the ribbons 48 and 49, respectively. The secondary coils 34-37 are connected via terminals (not shown) to a suitable measuring equipment.

When the rotary shaft 23 is rotated by any of the above-mentioned methods, as indicated by the arrow $\omega$, the stationary shaft 29 is subjected on the one hand to a pressure force indicated by the arrows $F_{ax}$ and, on the other hand, a torque indicated by the arrows M. As has been mentioned before, the permeability of the magnetoelastic ribbons is changed considerably already by very low forces. The pressure force $F_{ax}$ transmitted to the shaft 29 during analisys of the sample P exerts a compressive strain primarily on the axially directed ribbons 47, and even if the strain is very low, the magnetic properties of the ribbons 47 will thus be changed. In the embodiment according to Fig. 3, the coupling between the primary coil 33 and the secondary coil 34 is, because of the ribbons 47, far greater than the coupling between the primary coil 33 and the secondary coil 35 outside the region 50 having no magnetoelastic ribbons, and when the shaft is subjected to a pressure force, whereby the ribbons 47 are subjected to a compressive strain, the permeability of the ribbons and thus the coupling factor of the coils 33 and 34 will increase. Because of the increased permeability, the output voltage of the secondary coil 34 is increased, and the magnitude of the compressive force can be readily calculated by a comparison between the output voltages from the secondary coil 34 and the secondary coil 35. If the shaft 29 is subjected to tensile stress, the output signal of the secondary coil 34 is reduced correspondingly. The phase position of the sum signal indicates the direction of normal force.

The ribbons 48 and 49 are used for torque calculation. When the shaft 29 is subjected to a torque, the ribbons 48 opposite the secondary coil 36 will be subjected to a tensile force, whereas the ribbons 49 opposite the secondary coil 37 are subjected to a pressure force. The torque value is obtained by means of the measuring equipment connected to the secondary coils 36 and 37, and the phase position of sum signal indicates the direction of the torque. The arrangement of ribbons and coils as described above thus makes it possible to conveniently and extremely accurately measure the normal force transmitted to the shaft 29 and the direction thereof, as well as the torque transmitted to the shaft and the torque direction. In the above description, the stationary shaft is provided with ribbons and surrounded by coils, but it is possible, and for some applications desirable, to provide also the rotary shaft, or only the rotary shaft, with such ribbons and coils. Occasionally, one may wish to check the exact rotation of either one or both shafts 23, 29, and for this purpose it is possible, in accordance with Fig. 4, to mount on the shaft 23 and/or 29 a wheel 38 coaxial therewith and provided on its periphery with teeth 39 having a predetermined width and spaced apart by tooth gaps which also have a predetermined width. Furthermore, differential transducers with magnetic field plates, i. e. magnetically sensitive resistors, may be disposed closely adjacent the periphery of the toothed wheel 38. By connecting the magnetic field plates to a suitable measuring circuit via an operational amplifier, an output signal is obtainable which gives a highly accurate indication of the shaft rotation. Preferably, use is made of two transducers 40 to provide signals phase-shifted through 90°. By means of such a per se known arrangemant, a shaft rotation through but a hundred thousanth part of a degree can be established. Also other means are connectible to the shafts 23, 29 to produce sinusoidal signals which are phase-shifted through 90° and whose phase position is then measured with high resolution.

To rotate the shaft 23, it is possible to use, instead of the motor 21, the arrangement illustrated in Fig. 5. In this case, the shaft 23 consists of a magnetoelastic ribbon or rod of magnetostrictive material, a coil 41 being disposed around the shaft. The coil 41 is connected to a voltage source 42 and on both sides of the coil 41 terminals 43, 44 are provided to which are connected the opposed ends of a wire 45 connected to a current source 46. If a longitudinal magnetic field surrounding the rod is produced by means of the coil 41, and if at the same time a current is caused to flow from the source 46 through the rod, the rod will rotate, and the rotation can be transmitted, via the measuring probe 25, to the sample P positioned between the measuring probes 25 and 32. Rotation occurs in one direction, if the current source 46 is a direct current source, while an oscillation is obtained if the current source 46 is an alternating current source.

The stationary shaft 29 may be fixedly clamped and requires no measuring equipment since the viscoelastic properties of the sample P are obtainable by measuring the voltage across the terminals 43, 44 by means of a voltmeter 51 by disconnecting the current source 46 by means of a quick-acting electronic switch 52. The stationary shaft 29 may, of course, have the equipment shown in Fig. 3, or an angule measuring system as shown in Fig. 4. However, the arrangement according to Fig. 5 may be used also on the stationary shaft for measuring the torque transmitted, in which case the current source 46 is also disconnected and replaced by the instrument 51 for measuring the voltage across the terminals 43, 44 when the rod forming the shaft is rotated by the transmitted torque in the magnetic field generated by the voltage source 42.

**Claims**

1. A rheometer comprising a frame having at least one measuring probe (25, 32) which is rotable by means of a driving device and movable into engagement with a sample (P) whose viscoelastic properties are to be studied, and a measuring equipment for measuring energy transmitted from said measuring probe to said sample (P), **characterised** in that the measuring probe (25, 32) has a portion coaxial with the axis of rotation and provided with at least one peripheral set of ribbons (47-49) of magnetoelastic material, i.e. a material having a high magnetoelastic coupling factor, said portion being surrounded in contactless manner by at least one coil arrangement (33-37) which comprises a primary coil (33) connectible to a voltage source and a secondary coil (34-37) connected to a measuring equipment.

2. A rheometer as claimed in claim 1 having two measuring probes (25, 32), **characterised** in that each of the measuring probes (25, 32) are connected to a shaft (23, 29), one of said shafts being rotatable by means of a driving device, the other shaft being stationary, and at least one of said shafts constituting said portion, a sample (P) whose viscoelastic properties are to be studied, being positionable between and in contact with the measuring probes which are spaced apart an exactly adjustable distance, and a measuring equipment for measuring energy transmitted from one measuring probe to the other via said sample (P).

3. A rheometer as claimed in claim 1 or 2, **characterised** in that the magnetoelastic ribbons on the measuring probe portion and the shaft, respectively, are arranged in a first set of ribbons (47) having their longitudinal direction in the axial direction and positioned adjacent a shaft region (50) having no ribbons, and second and third sets of magnetoelastic ribbons (48, 49) which in their longitudinal direction form an angle of 45° and 135°, respectively, with the axial direction, said primary coil (33) covering all ribbon sets (47-49) and the region (50) having no ribbons, each ribbon set and the region having no ribbons being associated each with one secondary coil (34-37).

4. A rheometer as claimed in claim 1, 2 or 3, **characterised** in that the magnetoelastic ribbons (47-49) are in the form of tapes glued to the shaft, or consist of a magnetoelastic material deposited in fields on said shaft, for example by electrolysis.

5. A rheometer as claimed in any one of claims 1-4, **characterised** in that the measuring probe and the rotatable shaft, respectively, are connected to a motor (21) of a type capable of driving the measuring probe in the manner desired for the measuring operation, for example at a constant or oscillating angular velocity, a linearly increasing or decreasing angular velocity, a velocity changeable by steps, etc.

6. A rheometer as claimed in any one of claims 1-4, **characterised** in that the rotary measuring probe is connected to, or the rotary shaft consists of, a tape or rod of magnetostrictive material, the tape or rod being surrounded by a coil (41) connectable to a voltage source (42) for generating a magnetic field in said tape or rod and connectible, in terminals (43, 44) on both sides of said coil (41), to a current source (46) to cause said tape or rod to rotate upon application of a magnetic field.

7. A rheometer as claimed in claim 2, **characterised** in that the rotary and/or stationary shaft (23 and 29, respectively) consists of a tape of magnetoelastic material, i.e. a materiau having a high magnetoelastic coupling factor, or a rod of magnetostrictive material, which is surrounded by a coil connectable to a current source and, at terminals (43, 44) on either side of said coil (41), is connectable to a current source (46) or, alternatively, to a voltage measuring device (51).

8. A rheometer as claimed in any one of the preceding claims, **characterised** in that a device for measuring the shaft rotation is connected to said rotatable measuring probe or said rotary and/or stationary shaft (23 and 29, respectively), said device comprising a means secured to the shaft and adapted to generate sinusoidal signals phase-shifted through 90°, and means for measuring the phase position of said signals with high resolution.

9. A rheometer as claimed in any one of claims 2-8, **characterised** in that said shafts are arranged in a massive body (12) mounted on a stable base plate (10) and having a central horizontal through opening (13) into which said shafts (23, 29) project vertically from opposite bores (15, 16) in the body (12), such that the sample-receiving portion of said measuring probes (25, 32) is positioned approximately centrally within said opening (13).

10. A rheometer as claimed in claim 9, **characterised** in that the body (12) is restangular and the opening (13) therein is circular, and that the shafts (23, 29) project radially and axially centrally into said opening (13) and are surrounded by annular reinforcements (17, 18) formed integrally with the body and arranged on the wall defining said opening.

**Patentansprüche**

1. Rheometer, umfassend einen Ständer mit zumindest einem Messfühler (25, 32), der mittels einer Antriebsvorrichtung drehbar und mit einer Probe (P) in Eingriff führbar ist, deren viskoelastische Eigenschaften untersucht werden sollen, und eine Messvorrichtung zum Messen der vom Messfühler an die Probe (P) übertragenen Energie, dadurch **gekennzeichnet**, dass der Messfühler (25, 32) einen mit der Drehachse koaxialen Abschnitt hat, der mit zumindest einem peripheren Satz Bänder (47-49) aus magnetoelastischem Material versehen ist, d.h. einem Material mit einem hohen magnetoelastischen Kopplungsfaktor, wobei der genannte Abschnitt von zumindest einem Spulensatz (33-37) berührungslos umgeben ist, welcher eine an eine Spannungsquelle anschliessbare Primärspule (33) und eine an eine Messvorrichtung angeschlossene Sekundärspule (34-37) umfasst.

2. Rheometer nach Anspruch 1, umfassend zwei Messfühler (25, 32), dadurch **gekennzeichnet**, dass jeder Messfühler (25, 32) an eine Welle (23, 29) angeschlossen ist, wobei eine der Wellen mittels einer Antriebsvorrichtung drehbar und die andere Welle ortsfest ist, und zumindest eine der Wellen den genannten Abschnitt ausmacht, wobei eine Probe (P), deren viskoelastische Eigenschaften untersucht werden sollen, zwischen und in Berührung mit den Messfühlern anbringbar ist, deren Abstand voneinander genau einstellbar ist, und wobei das Rheometer eine Messvorrichtung zum Messen der über die genannte Probe (P) vom einen Messfühler an den anderen übertragenen Energie umfasst.

3. Rheometer nach Anspruch 1 oder 2, dadurch **gekennzeichnet**, dass die magnetoelastischen Bänder an dem Messfühlerabschnitt bzw. der Welle in einem ersten Satz Bänder (47), deren Längsrichtung sich in der Achsrichtung erstreckt und welche neben einem Wellenbereich (50) ohne Bänder untergebracht sind, sowie in zweiten und dritten Sätzen magnetoelastischer Bänder (48, 49) angeordnet sind, welche in Längsrichtung mit der Achsrichtung einen Winkel von 45° bzw. 135° einschliessen, wobei die Primärspule (33) alle Bandsätze (47-49) und den bandlosen Bereich (50) abdeckt, und jedem Bandsatz und dem bandlosen Bereich je eine Sekundärspule (34-37) zugeordnet ist.

4. Rheometer nach Anspruch 1, 2 oder 3, dadurch **gekennzeichnet**, dass die magnetoelastischen Bänder (47-49) die Form von an der Welle festgeleimten Streifen haben oder aus einem in Feldern an der Welle z.B. durch Elektrolyse abgesetzten, magnetoelastischen Material bestehen.

5. Rheometer nach einem der Ansprüche 1-4, dadurch **gekennzeichnet**, dass der Messfühler bzw. die drehbare Welle mit einem Motor (21) eines Typs verbunden sind, der in einer für den Messvorgang gewünschten Weise, z.B. mit einer konstanten oder oszillierenden Winkelgeschwindigkeit, einer linear zu- oder abnehmenden Winkelgeschwindigkeit, einer stufenweise veränderbaren Geschwindigkeit usw., den Messfühler antreiben kann.

6. Rheometer nach einem der Ansprüche 1-4, dadurch **gekennzeichnet**, dass der drehbare Messfühler an einen Streifen oder Stab aus magnetostriktivem Material angeschlossen ist, oder die drehbare Welle aus einem derartigen Streifen oder Stab besteht, welcher von einer Spule (41) umgeben ist, die zum Erzeugen eines Magnetfelds im genannten Streifen oder Stab an eine Spannungsquelle (42) anschliessbar und zum Drehen des Streifens oder Stabs bei einem angelegten Magnetfeld in Anschlusspunkten (43, 44) auf beiden Seiten der Spule (41) an eine Stromquelle (46) anschliessbar ist.

7. Rheometer nach Anspruch 2, dadurch **gekennzeichnet**, dass die drehbare und/oder ortsfeste Welle (23 bzw. 29) aus einem Streifen aus magnetoelastischem Material, d.h. einem Material mit einem hohen magnetoelastischem Kopplungsfaktor, oder einem Stab aus magnetostriktivem Material besteht, der von einer Spule umgeben ist, welche an eine Stromquelle anschliessbar und in Anschlusspunkten (43, 44) auf beiden Seiten der Spule (41) an eine Stromquelle (46) oder alternativ an eine Spannungsmessvorrichtung (51) anschliessbar ist.

8. Rheometer nach einem der vorhergehenden Ansprüche, dadurch **gekennzeichnet**, dass eine Vorrichtung zum Messen der Wellenumdrehung an den drehbaren Messfühler oder die drehbare und/oder ortsfeste Welle (23 bzw. 29) angeschlossen ist, wobei die Vorrichtung ein Mittel, das an der Welle befestigt ist und um 90° phasenverschobene Sinussignale erzeugt, und ein Mittel umfasst, das die Phasenlage der Signale mit hoher Auflösung misst.

9. Rheometer nach einem der Ansprüche 2-8, dadurch **gekennzeichnet**, dass die Wellen in einem auf einer stabilen Tragplatte (10) angebrachten, massiven Körper (12) angeordnet sind, der eine zentrale, waagerechte Durchgangsöffnung (13) aufweist, in welche die Wellen (23, 29) von entgegengesetzten Bohrungen (15, 16) im Körper (12) senkrecht hineinragen, so dass sich der die Probe aufnehmende Abschnitt der Messfühler (25, 32) etwa in der Mitte der Öffnung (13) befindet.

10. Rheometer nach Anspruch 9, dadurch **gekennzeichnet**, dass der Körper (12) rechtwinklig und seine Öffnung kreisförmig ist, und dass die Wellen (23, 29) radial und axial in die Mitte der Öffnung (13) hineinragen und von ringförmigen Verstärkungen (17, 18) umgeben sind, die einstückig mit dem Körper geformt und an der die Öffnung abgrenzenden Wand angeordnet sind.

**Revendications**

1. Rhéomètre comprenant un châssis ayant au moins une sonde de mesure (25, 32) qui peut tourner sous l'action d'un dispositif d'entraînement et qui est mobile afin qu'elle vienne au contact d'un échantillon (P) dont les propriétés viscoélastiques doivent être étudiées, et un appareillage de mesure de l'énergie transmise de la sonde de mesure à l'échantillon (P), caractérisé en ce que la sonde de mesure (25, 32) a une partie coaxiale à l'axe de rotation et ayant au moins un jeu périphérique de rubans (47-49) d'un matériau magnétoélastique, c'est-à-dire d'un matériau ayant un facteur élevé de couplage magnétoélastique, cette partie étant entourée, sans contact, par au moins un ensemble de bobinages (33-37) qui comprend un bobinage primaire (33) qui peut être connecté à une source de tension et un bobinage secondaire (34-37) connecté à un appareillage de mesure.

2. Rhéomètre selon la revendication 1, ayant deux sondes de mesure (25, 32), caractérisé en ce que chacune des sondes de mesure (25, 32) est connectée à un arbre (23, 29), l'un des arbres pouvant être entraîné en rotation par un dispositif d'entraînement, l'autre arbre étant fixe, et l'un au moins des arbres constituant ladite partie, un échantillon (P) dont les propriétés viscoélastiques doivent être étudiées pouvant être placé entre les sondes de mesure et au contact de celles-ci qui sont séparées d'une distance réglable exactement, et il comporte un appareillage de mesure de l'énergie transmise d'une sonde de mesure à l'autre par l'intermédiaire de l'échantillon (P).

3. Rhéomètre selon la revendication 1 ou 2, caractérisé en ce que les rubans magnétoélastiques placés sur la partie de sonde de mesure et l'arbre, respectivement, sont répartis entre un premier jeu de rubans (47) dont la direction longitudinale s'étend dans la direction axiale et qui sont placés près d'une région (50) d'arbre n'ayant pas de rubans, et un second et un troisième jeu de rubans magnétoélastiques (48, 49) dont la direction longitudinale fait un angle de 45° et 135°, respectivement, avec la direction axiale, le bobinage primaire (33) recouvrant tous les jeux de rubans (47-49) et la région (50) n'ayant pas de rubans, chaque jeu de rubans et la région n'ayant pas de rubans étant associés chacun à un bobinage secondaire (34-37).

4. Rhéomètre selon la revendication 1, 2 ou 3, caractérisé en ce que les rubans magnétoélastiques (47-49) sont sous forme de rubans collés à l'arbre, ou sont constitués d'un matériau magnétoélastique déposé dans des zones de l'arbre, par exemple par électrolyse.

5. Rhéomètre selon l'une quelconque des revendications 1 à 4, caractérisé en ce que la sonde de mesure et l'arbre rotatif, respectivement, sont connectés à un moteur (21) d'un type qui permet l'entraînement de la sonde de mesure de la manière voulue pour l'opération de mesure, par exemple à une vitesse angulaire constante ou oscillante, à une vitesse angulaire croissant ou décroissant linéairement, à une vitesse qui varie par paliers, etc.

6. Rhéomètre selon l'une quelconque des revendications 1 à 4, caractérisé en ce que la sonde rotative de mesure est connectée à un ruban ou une tige d'un matériau ayant une propriété de magnétostriction ou l'arbre rotatif est constitué d'un tel ruban ou d'une telle tige, le ruban ou la tige étant entouré par un bobinage (41) qui peut être connecté à une source de tension (42) destinée à créer un champ magnétique dans le ruban ou la tige et qui peut être connecté, par des bornes (43, 44) placées des deux côtés du bobinage (41), à une source de courant (46) afin que le ruban ou la tige tourne lors de l'application d'un champ magnétique.

7. Rhéomètre selon la revendication 2, caractérisé en ce que l'arbre rotatif et/ou fixe (23 et 29, respectivement) est constitué d'un ruban d'un matériau magnétoélastique, c'est-à-dire un matériau ayant un facteur élevé de couplage magnétoélastique, ou d'une tige d'un matériau à effet de magnétostriction qui est entouré par un bobinage qui peut être connecté à une source de courant et qui peut être connecté, à des bornes (43, 44) de part et d'autre du bobinage (41), à une source de courant (46) ou, dans une variante, à un dispositif (51) de mesure de tension.

8. Rhéomètre selon l'une quelconque des revendications précédentes, caractérisé en ce qu'un dispositif de mesure de la rotation de l'arbre est connecté à la sonde rotative de mesure ou l'arbre rotatif et/ou fixe (23 et 29 respectivement), le dispositif comprenant un dispositif fixé à l'arbre et destiné à créer des signaux sinusoïdaux déphasés de 90°, et un dispositif de mesure de la position de la phase des signaux avec une résolution élevée.

9. Rhéomètre selon l'une quelconque des revendications 2 à 8, caractérisé en ce que les arbres sont placés dans un corps massif (12) monté sur une plaque stable de base (10) et ayant une ouverture centrale débouchante horizontale (13) dans laquelle les arbres (23, 29) passent verticalement à partir de trous opposés (15, 16) formés dans le corps (12), si bien que la partie de logement d'échantillon des sondes de mesure (25, 32) est placée à peu près au centre dans l'ouverture (13).

10. Rhéomètre selon la revendication 9, caractérisé en ce que le corps (12) est rectangulaire et l'ouverture (13) qui y est formée est circulaire, et en ce que les arbres (23, 29) sont disposés radialement et axialement au centre dans l'ouverture (13) et sont entourés par des organes annulaires de renforcement (17, 18) formés d'une pièce avec le corps et disposés sur la paroi délimitant l'ouverture.

Fig.1

Fig.2

EP 0 335 871 B1

Fig. 3

Fig. 4

Fig. 5

9